Europäisches Patentamt

European Patent Office

Office européen des brevets

(19)

(11) Publication number: **0 060 517**
**A1**

(12) **EUROPEAN PATENT APPLICATION**

(21) Application number: **82101946.0**

(22) Date of filing: **11.03.82**

(51) Int. Cl.³: **H 04 M 11/06**

(30) Priority: **12.03.81 IT 6734581**

(43) Date of publication of application: **22.09.82**
**Bulletin 82/38**

(84) Designated Contracting States: **CH DE FR GB LI NL SE**

(71) Applicant: **CSELT Centro Studi e Laboratori Telecomunicazioni S.p.A., Via Guglielmo Reiss Romoli, 274, I-10148 Turin (IT)**

(72) Inventor: **Chiarottino, Volmer, Via Frassinetto, 8, Villanova Can.se Torino (IT)**

(74) Representative: **Riederer Freiherr von Paar zu Schönau, Anton et al, Müllerstrasse 31, D-8000 München 5 (DE)**

(54) **Multiple access system of terminals on a digital telephone line.**

(57) System allowing multiple access of terminals on a digital telephone line by the use of a carrier-sense random multiple access protocol.

The possible collision cases in the access to the line are arbitrated by means of a «hardware» procedure which for each message univocally assigns the line to one only of the contending terminals.

*Patentanwalt*

*Dipl.-Ing. Anton Freiherr* *Riederer von Paar*

Müllerstraße 31
D-8000 München 5

☎ München (089) 26 60 60
Telex 523 903 claim d
✝ claims München

**0060517**

CSELT Centro Studi e Laboratori
Telecomunicazioni S.p.A.
Via Guglielmo Reiss Romoli, 274
I- 10148 Turin, Italy

## MULTIPLE ACCESS SYSTEM OF TERMINALS
## ON A DIGITAL TELEPHONE LINE

### Description

The present invention relates to digital apparatus interconnection systems on a telephone line towards the exchange and more particularly it concerns a bidirectional connection system of terminals and digital telephone sets towards the telephone exchange.

The consolidated and expanded use of terminals for long distance data transmission and the introduction of new services (such as: Teletex, Videotex, fac-simile, etc.) emphasize the development already in progress in the whole telephone network, and in particular in the subscriber's distribution network, oriented towards digital-type signal handling and transmission.

The availability of higly integrated components specific for telephone applications such as encoders (codecs), filters, line interface circuits (slic), which are increasingly cost-competitive with respect to the traditional electro-mechanical technologies, makes digital-to-analog speech conversion possible and digital line control feasible at the subscriber's.

In this view the traditional subscriber's loop becomes a digital line on which it is possible to allocate according to digital standards which are being specified, both a 64 Kbit/s synchronous channel for speech transmission or, as an alternative, for circuit-switched data transmission (according to circuit switching technique), and the so-called channel "Δ", at a lower bit rate, dedicated to the signalling and to the packed-switched data stream.

(Document CEPT: T/GSI/80/90 "First Report of CEPT Special Group on ISDN" October 1980).

Various differing approaches exist to the problems of the access by the terminals to the above-mentioned channels. All the terminals have to be given the access to the channel "$\Delta$" as the signalling transits through it, while the 64 Kbit/s channel is used only by the digital telephone set for digital speech transmission and by the terminals characterized by a high-rate or high activity data transmission.

The remaining terminals, characterized by a bursty low-rate data transmission, use the channel "$\Delta$" also for the data transmission.

The 64 Kbit/s channel is univocally assigned during the whole call time to only one terminal which can access it, while on channel "$\Delta$" the contemporaneous connection of a plurality of terminals ought to be ensured, on the basis of the single messages, by means of stream-control procedures.

It is worth noting that the 64K bit/s channel assignment occurs as a consequence of the signalling phase, between a terminal and the the exchange, carried out on channel "$\Delta$".

Finally the data on the 64 Kbit/s channel are synchronous by octets, while on channel "$\Delta$" they are transmitted by packets according to a high-level protocol of HDLC type (ISO/DIS 4335 "Data communication - High level Data Link Control Procedures - Elements of Procedures 1976").

Said two channels present two different embodiment problems relating to the access to the channels.

The present invention solves the problem of the access to the channel "$\Delta$" meanwhile assuring an easy feasibility of the access to the other channel.

In the following by the term "line access", unless differently specified, it will be intended "the access to the only channel "$\Delta$" "; in addition by "transmission line" it will be intended a conventional telephone loop.

In the technics various line access systems are known, the main ones being listed below:

- Systems allowing a synchronous time-sharing line access and providing a fixed time slots assignment to the single terminals, analogously to what occurs in the PCM systems.

Such time slots may be short, e.g. equal to a single octet, or long enough to allow the transmission of a whole message according to maximum fixed lengths.

In both cases these systems present the disadvantage of being com-plicated and expensive with respect to their application to the low traffic on the loop; furthermore as the terminal transmission characteristics are neither constant nor regular, but impulsive (bursts), said systems have a very poor line utilization efficiency.

- Systems by which the terminals access, either directly or after pol-ling, to a suitable apparatus, located at the subscriber's, combining concentration, multiplexing and arbitration functions in different shapes according to different performances and requirements.

Such a solution presents the disadvantage of requiring a more or less emphasized characterization of said subscriber's centralized apparatus depending on the type and number of the connected terminals. Besides said apparatus can be complex enough and such as to prevent the capability of a remote power feeding (or to make it more difficult). Finally, solutions of this kind often require a message store and forward in suitable local memories.

- Systems through which the terminals are polled and enabled by the exchange it self by means of a line terminal unit, one for each subscriber, as a consequence of a procedure of dialog and service message exchange with the terminals themselves.

Said systems present the disadvantage of requiring a dialog protocol of the master - slave type (with the exchange performing as a master) rather than the most widely diffused and flexible balanced protocol.

Even greater delays are added to the set-up time and to the message delivering time , lowering the line efficiency chiefly if a high number of terminals is present.

- Systems by which the terminals themselves directly control the line access both using arbitrating and control circuits distributed in each of them and reciprocally exchanging information on the availability status of the line on a supplementary service line.

The solution provided here, allows the presence of a decentralized apparatus on all the terminals, but it requires a supplementary interconnection between each terminal and the logic associated with it. This disadvantage can be overcome by using a procedure allowing a random access of the type used by the ALOHA system (N. Abramson -F. Kuo "The Aloha system" - Computer communication network - Prentice - Hall Inc. 1973) and by those derived from it. However these systems present a highly reduced channel efficiency and, under particular traffic conditions, channel saturation and unstability phenomena may also occur.

- A particular kind of random-access system is described in the Italian patent appl. No. 68691-A/80 filed on 6th Nov. 1980 = European patent appl. No. 81109021.6 filed on 28th October 1981 by CSELT.

Said patent refers to a distributed-structure message-switching system on multiple random access channel capable of acting as an input-output interface between processing units, which originate the messages and of being connected to all such processing units by two independent physical lines, one for data message transmission and the other, designed to solve, by means of criteria allowing a logic level to prevail over the other the conflicts for accessing the channel, wherein said switching system solves, at each time slot, the conflict for gaining the channel possession by its own processing unit identified by its own address, by previously checking the busy or free state of the channel, and in case the channel is free, by making a bit-by-bit comparison between the signals transmitted on the service line and the internal addressing ones of the processing unit, prosecuting said bit-by-bit comparison till either on the service line it finds a bit having logic level prevailing on its own, what causes it to desist from the conflict by postponing the access attempt until a next slot in which it finds the channel free again, or to the end of the last address bit, what causes the acquisition of the channel over which it forwards its own data message.

Yet in said system the terminals and/or the intelligent units use a channel acquisition procedure utilizing a further service line with relative associated logics; in addition data reception and transmission occur over a single physical line. For some applications, these features could be felt disadvantageous.

These problems are solved by the present invention of a system allowing the multiple access of subscribers' terminals on a digital telephone line by using a carrier sense multiple random access protocol or CSMA (L. Kleinrock, F.A. Tobagi "Packet switching in radio channels", IEEE transactions on communications, vol. COM. 23, n. 12, December 1975).

There is provided by the present invention an access system of a plurality of terminals on a line by means of a carrier sense multiple random access protocol, said system presenting a distributed structure on said terminals and consisting of a plurality of interface circuits, placed as input-output circuits one per each terminal, and of an interconnection which directly connects all the interface circuits to one another and to a modulation-demodulation apparatus which is connected to the line, said interconnection comprising at least a data transmission channel, a clock channel associated with the transmission, a data reception channel and a clock channel associated with the reception, wherein said system continuously recognizes the presence (busy state) or the absence (free state), of a data transmission on said data transmission channel and, upon recognition of said "free state", it uses said data transmission channel both to solve, by prevailing logic level criteria, the conflict for an access to said channel by a plurality of terminals and to forward onto said channel the whole message of the winning terminal.

The foregoing and other characteristics of the present invention will become clearer by means of the following description of a preferred embodiment thereof given by way of example and not in a limiting sense, in which:

- Fig. 1 is a general view of the terminal connections from and to the exchange;

- Fig. 2 shows the block diagram of the device provided by the present invention;

- Fig. 3 shows a time diagram useful to the understanding of the device operation.

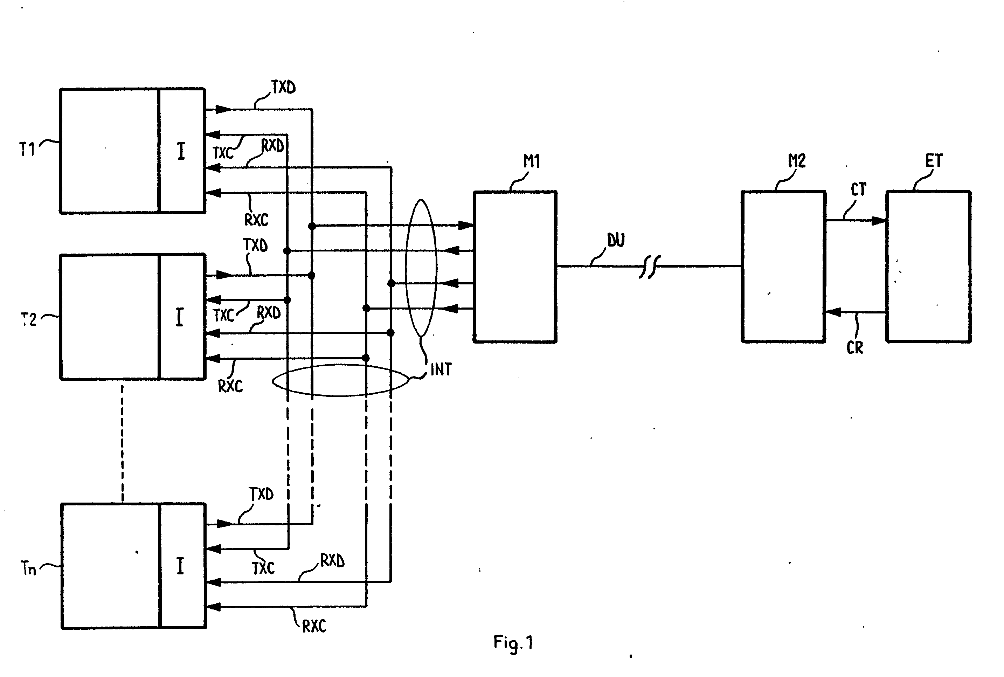

References T1, T2,..... Tn in Fig. 1 denote the various terminals.

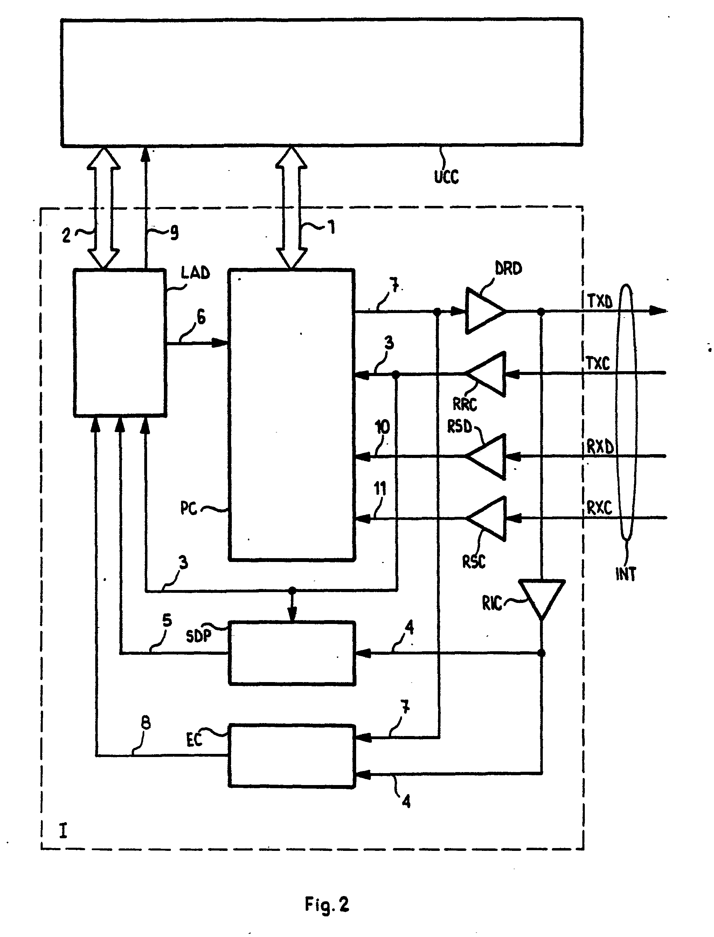

Inside terminals T reference I denotes the interfaces consisting of the main subject of the present invention which will be examined with reference to Fig. 2.

Apart from interface I, the various terminals T are basically of known type.

Each terminal T is connected, in common with all the other terminals, to an interconnection INT comprising: a data transmission channel TXD and a channel TXC for the clock signal associated with the transmission, a data receiving channel RXD and a channel RXC for the clock signal associated with the reception.

The two associated clock signals are originated in the exchange and are supplied to all the terminals.

Interconnection INT is connected to a modulation-demodulation apparatus MI allowing the access to a normal transmission line or subscriber's loop DU.

The apparatus MI consists of a "modem" of any known type which encodes and decodes the signals on the subscriber's loop and is capable of performing the data and speech full-duplex transmission at rates higher than 64 Kbit/s (S. Floris, G. Pellegrini A. Tofanelli: "Problemi tecnici nella trasmissione numerica sulle linee d'utente", 28° Convegno Internazionale delle Comunicazioni-Genova, ottobre 1980).

The subscriber's line DU is then connected to another similar "modem" M2, located in the exchange and which is connected via the transmission connection CT and reception connection CR to the exchange itself by means of an interfacing line device ET, one for each subscriber, which is of known type too.

In Fig. 2, reference UCC denotes a generic central management and control unit, being part of any single terminal T, implemented by known techniques, e. g. by a microprocessor unit, managing all the functions carried out by the terminal and in particular capable of generating the messages to be transmitted on channel TXD through the interface circuit I , dotted in Fig. 2, which is an essential part of this invention.

The data sequence generated by UCC is transmitted on the transmission channel TXD (also shown in Fig. 1); the associated clock signal is received on channel TXC; the data sequence, coming from the interfacing line device ET (already shown in Fig. 1), is received on the receiving channel RXD, and the associated clock signal is received on channel RXC.

As previously mentioned, each of the above-mentioned channels is a part of the interconnection INT linking all the terminals to one another, and to the modem M1 (Fig. 1).

Reference DRD in Fig. 2 denotes a driver circuit, of known type, of channel TXD, with an open-collector output, allowing a predetermine logic level (e. g. "0") to prevail on transmission channel TXD.

Considering also Fig. 1, it is to be noted how the outputs of the various drivers DRD, one per each terminal, result connected together by means of channel TXD which is in common with all the terminals.

References RSD, RRC and RSC denote three line receivers designed to the reception of the bit flows respectively present on data channel RXD and on clock channels TXC and RXC.

Reference RIC denotes another line receiver similar to the three above-mentioned receivers.

Reference PC denotes a circuit capable of generating and receiving HDLC messages; such a circuit is generally composed of a single VLSI integrated circuit technique of known type.

Reference SDP denotes a block operating as a carrier sensor, basically consisting of a shift register and a decoder signalling the free or busy state of the transmission channel, by recognizing on said transmission channel the presence or absence of seven consecutive "1s". The way to realize it is known to the person skilled in the art.

Reference EC denotes a usual circuit, consisting of a comparator which makes the comparison between the bits present on transmission channel TXD at the output of block DRD, and the bits present at the output of block PC and then at the input of block DRD.

Reference LAD denotes a logic circuit whose tasks are the following:

- receiving and memorizing the commands, sent by UCC, relating to the beginning of a message transmission;
- enabling or disabling the transmission itself on channel TXD by means of commands transmitted to PC, as a consequence of checks on the transmission trend, received from SDP and EC;
- communicating the transmission result to UCC.

Its embodiment is not a problem to the person skilled in the art.

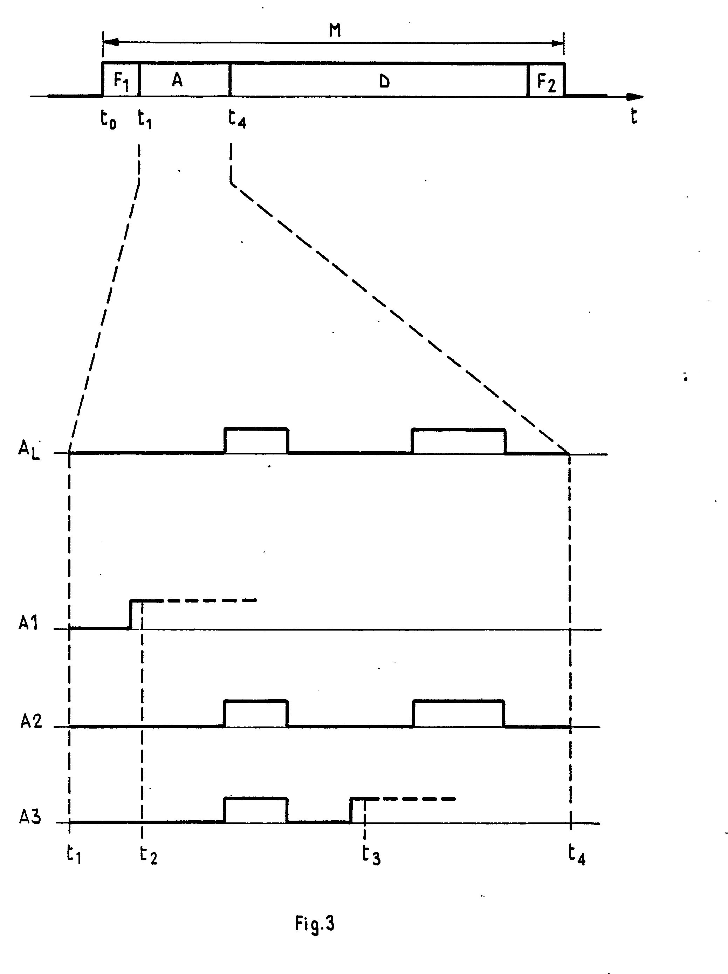

Reference M in Fig. 3 denotes a generic HDLC message plotted on the time axis "t", to be transmitted on channel TXD.

A message M comprises: a field F1, consisting of a flag, signalling the start of the message, which is the same as in all the messages; a field A in which the address of the terminal that is transmitting is present; a variable-length field D in which the actual data are present; a field F2 consisting of a flag signalling the end of message.

Hereinafter, contention, acquisition and access to the transmission line will be referred to respectively as contention, acquisition and access to data transmission channel TXD.

In addition in Fig. 3 there are shown the modalities of collision, when present, and also of the acquisition of the channel TXD and of the subsequent message transmission, which will be described more in detail hereinafter.

The time - period relative to the address field A has been lengthened; said time period being that during which the collision and consequent transmission channel contention, by a plurality of subscribers' terminals which would like to simultaneously start the transmission, may take place.

In Figure 3 references A1, A2, A3 denote the addresses of three terminals, T1, T2, T3 respectively, which at the instant "$t_0$" simultaneously start the message emission.

As will be explained hereinafter, the contention will begin at the start instant "$t_1$" of the address field. By supposing logic level "0" to have higher priority, at the instant "$t_2$" the terminal T1 desists; at the instant "$t_3$" the terminal T3 desists. At the instant "$t_4$" the address field A ends, and therefore the contention procedure ends too.

Terminal T2 is the winning one and therefore the transmitted message will be its own. Reference $A_L$ therefore denotes the actual address present on the transmission channel TXD which is the one belonging to the winning terminal T2.

Something more has to be added before describing the operation of the device provided by the present invention.

Each terminal starts the transmission, or, to speak more correctly, it makes an attempt to start the transmission of its message, only after ascertaining the absence of other messages which are already being transferred onto channel TXD.

To this purpose the free or busy state of the transmission channel can be sensed depending on the presence or absence on it of a sequence of a determined number of consecutive "1s". In fact since the messages have a HDLC format, in case of transmission, there is, in the most disadvantageous case, at least one "zero" after a sequence of five consecutive "1s" (bit stuffing) and in case of absence of transmission all the terminals are in the idle state and they emit a continuous sequence of "1s".

The collision possibilities are consequently reduced to the only case in which two or more terminals simultaneously start to transmit after sensing the availability of the transmission channel.

This usually occurs at the end of a transmission by a terminal when other units are in turn waiting, and it is an event of reduced probability.

Since the clock signal is distributed by the modem common to all the terminals of the same subscriber, all said terminals are synchronous with one another.

In case of simultaneous access to channel TXD, all the terminals will, without any exception, begin to emit at the same time the same flag field F1.

The actual collision takes place in the subsequent field A in which each terminal emits its own address which has been univocally assigned.

As the access to the channel TXD is implemented in digital technique with one logic level prevailing on the other one (in the present case logic level "zero" is prevailing), it happens that, if at the same bit time two or more terminals have to emit on the channel TXD different logic levels, the logic level "0" is always prevailing.

Therefore each terminal T, by effecting a comparison between its own emitted bit and the one present on channel TXD, in case of difference between the two bit values, is capable of ascertaining whether at least another terminal exists which contemporaneously transmits with a higher priority on the channel.

Due to the prevailing, on the channel, of the logic level "0", in fact, said difference can take place only if said terminal T is transmit-

ting a "1".

In this case the terminal or the terminals, which have sensed the difference, interrupt the transmission, as shown in fig. 3.

The comparison takes place during the transmission of all the address bits; at the end of the last address bit, one and only one terminal will be sure to have correctly transmitted its address on channel TXD and consequently to have won the channel possession, so it can prosecute the transmission of the whole message, or even of a plurality of messages provided they are consecutive, being sure that it will undergo no further collision; in the case of a plurality of consecutive messages, it will be convenient to make the flag F2 of the end of a message to coincide with that of start of the next message.

In case, however, the acquisition of transmission channel is not required for a plurality of consecutive messages by a single terminal, the insertion is necessary, between each flag F2 of end of a message and the subsequent flag F1, of an idle period having a minimum length of seven bits, so as to allow the procedure of contention and acquisition of the channel itself to set up.

With reference to Fig. 2, we suppose that a terminal Q has a message to forward over the transmission channel.

UCC writes in the PC block, by means of connection 1, both the address of its terminal, corresponding to the field A of the message to forward (see also Fig. 3 ), and the command which presets the block PC to transmission.

At the same time UCC sends, through connection 2, a command to LAD to activate the procedure of access to the transmission channel.

The previous operations are carried out by UCC in an asynchronous way with respect to the timing present on channels TXD and RXD.

On the contrary blocks PC, LAD, SDP are synchronized in transmission by the clock signal received on wire 3 through the channel TXC and the block RRC.

SDP continuously checks the transmission channel state, i. e. it checks whether the channel is already busy or not. In fact through wire 4 and block RIC, SDP receives the bits present on transmission channel TXD; then at each bit time, synchronously with the clock signal present on wire 3, SDP checks whether the last seven bits which have flown on channel TXD are all characterized by logic level "1".

If one or more of said last seven bits have a logic level "0", i.e. if the line is busy, SDP signals said condition to block LAD through wire 5.

If on the contrary all the last seven bits have logic level "1", or when said condition is reached SDP supplies block LAD, through wire 5, with a signal indicating that the transmission channel is free. Under these conditions LAD enables PC, through wire 6, to start the message transmission.

Then the message transmission begins with flag field F1 (see also Fig. 3), equal for all the messages and for all the terminals: therefore on this field there isn't yet any contention with the other terminals which may start the transmission at the same time.

Once the emission of the flag field F1 is over, PC starts the transmission of the first bit of the address field A.

The transmitted address bit is also sent, through wire 7, to the comparison circuit EC, even before being transferred on the channel TXD through DRD.

At the same time EC receives, through wire 4 and RIC, the logic state present on TXD.

EC makes the comparison between the values of the two received bits. The comparison result is sent to LAD via wire 8.

If the two bits are equal, LAD still keeps the enable signal (wire 6) to the block PC that can thus continue the transmission, by emitting the second bit of the address field A.

If however the two bits have different values, that is a higher - priority terminal exists that transmits at the same time, then LAD, always through wire 6, disables the block PC to continue the transmission and

0060517

communicates this fact to UCC by means of an interrupt signal on wire 9.

The same procedure applies to all the other address bits, up to the last one.

In case at least one of the comparison results has been negative, with consequent transmission interruption, the whole procedure is repeated starting from the initialization of blocks PC and LAD effected by UCC according to what previously described.

If on the contrary also the transmission of the last address bit has taken place correctly, block PC can forward the whole message which, byte by byte, it receives from UCC through connection 1.

At the end of the message, and in case no further messages have to be transmitted, UCC resets the logic LAD by a command emitted on connection 2.

Since the logic of block EC effects the bit - by - bit comparison on the address field, the propagation time delays on the channel and consequently the channel length are to be taken into account, so as to ensure the correctness of the comparison operation.

In the present case the bit rate on the channel is standard and its value is comparatively low, i. e. equal to 8 or 16 kbit/s, therefore having a duration that widely compensates for the propagation time delays on the transmission channel, also for terminals placed at a considerable distance from one another, thus ensuring the correct operation of the comparison circuit EC.

While in transmission towards the exchange the system consists of a single multiple - random - access channel, in reception there is a star configuration, operationally consisting of a single diffusion channe.

The interfacing line device ET (Fig. 1) in fact sends each messag towards all its own terminals; each terminal considers only the messag in which it recognizes its own address, leaving the remaining messages to the other terminals.

In fact, with reference to Fig. 2, each terminal receives, by means of receiver RSD and wire 10, the whole sequence of the messages trans-

- 14 -

mitted by the exchange, through channel RXD.

The bits of each message are loaded into PC with a timing determined by the clock signal received through the channel RXC, the receiver RSC and the wire 11.

Block PC senses the address field of each message: in case it coincides with the field of its own terminal address, PC continues the message acquisition and sends the message to UCC through connection 1.

Whenever, on the contrary, no address coincidence exists, the message is ignored by PC.

Some advantages deriving from the present invention are evident. In fact in the present system the collisions are resolved in any case by the sending of a message, which, being unaltered, can correctly arrive at its destination.

Waiting queues of variable length may be generated on the transmission channel, depending on the different activity intensity of the various sources. But, as in any case there is a winning terminal, no activity increase is produced by message repetition, and as a consequence there are no interruptions, even for long periods, due to repeated unsuccessful attempts to effect the same retransmissions.

Therefore the system has stability under every operative condition allowing maximum channel utilization. There are no channel saturation phenomena. As each unit immediately becomes aware of the occurred collision of its own message with a higher priority one, long acknowledgement wait-periods are not required.

Finally the disadvantages due to the presence of incomplete messages are absent, therefore in reception no time is lost for checking and refusing operations, and above all in the line no time fraction is lost.

The above - listed features all together help to maintain the channel efficiency high.

The system presents the further advantage of a structure entirely distributed on the various connected units and in addition it requires no apparatus to be inserted between the terminals T and the modem M1

0060517

(Fig. 1 ) performing as a concentrator, multiplexer and arbiter. On the contrary, according to the present solution, the line protocol is entirely controlled by the terminals, and, at the opposite connection end, by the interfacing line device ET.

A possibile failure in one of the terminals is not detrimental to the correct operation of the remaining terminals, and requires no modification of the system in general, unless in case of failure in the channel driving circuits.

Therefore the system ensures high overall reliability.

The terminal number can be easily increased without requiring any modifications or additions of new apparatuses, to meet new or changed requirements.

The prevalence on the line of one logic level on the other is to the advantage of those terminals whose address begins with the bits corresponding to said level.

This is advantageous to the embodiments in which terminals at different priority level are required. In case of terminals all at the same priority level it is possible, when required, to insert in one or more terminals a known logic circuit complementing the terminal address as a consequence of each transmission attempt, in order to give it a higher priority level at the subsequent conflict.

As previously mentioned, the described method of access to the channel "Δ" entails neither complications nor limitations to the access to the 64 Kbit/s channel.

However, as for accessing the channel "Δ" the terminals are connected to a single transmission channel and to a single reception channel, namely to a serial bus, also the 64 kbit/s channel can conveniently use an implementing technique similar to the one just described for the channel "Δ".

In fact the terminals which have also the 64 kbit/s channel, such as for instance the digital telephone sets, are equipped with a suitable output, for said channel, physically separated from the one for the channel " Δ ".

Said suitable outputs, one for each of said terminals, not shown in the drawings as not comprised within the scope of the present invention, can be connected onto a suitable input, this too not shown in the drawings, provided on modem M1 (Fig. 1) by means of known concentration techniques. Then it will be up to the modem M1 to compact in a known way on loop DU both the channel "Δ" and the 64 Kbit/s channel.

No particular circuitry is necessary as no collision problems are encountered, since a terminal starts transmitting on the 64Kbit/s channel only upon a signalling procedure, previously effected on the channel "Δ", by which procedure the terminal receives the enabling from the exchange to use the 64 Kbit/s channel.

Modifications and variations of the above described example of embodiment are possible without limiting the scope of the invention.

## Patent Claims

1) Access system of a plurality of terminals (Tn) on a line (DU) by means of a carrier-sense multiple random access protocol, said system having a distributed structure on said terminals and consisting of a plurality of interface circuits (I), performing as input - output devices, one per each terminal, and of an interconnection (INT) which directly connects all the interface circuits to one another and to a modulation-demodulation apparatus (MI) which is connected to the line, said interconnection comprising at least a data transmission channel (TXD), a clock channel associated with the transmission (TXC), a data reception channel (RXD) and a clock channel associated with the reception (RXC), characterized in that said system continuously recognizes the presence (busy state) or the absence (free state) of a data transmission on said data transmission channel, and, upon recognition of said free state, it uses said data transmission channel (TXD) both to solve, by logic-level prevailing criteria, the conflict for the access to said channel by a plurality of terminals, and to forward onto said channel (TXD) the whole message of the winning terminal.

2) Access system as in claim 1, characterized in that it recognizes said busy or free state by examining a predetermined number of bits present on said data transmission channel (TXD), also characterized in that said predetermined number of bits consists at least of the last seven bits transmitted on said data transmission channel (TXD), and in that, when all said last seven bits have a non - prevailing logic level , said access system recognizes said free state, when on the contrary at least one of said last seven bits has a prevailing logic level, said access system recognizes said busy state.

3) Access system according to claim 1, characterized in that it solves said access conflict during the sending on said data transmission channel (TXD) of a first part of said message, said first part of the message being used for solving said access conflict.

4) Access system according to claims 1 and 3, characterized in that said first part of said message is the address of the terminal that after said access conflict is identified as the winner.

5) Access system as in the previous claims, characterized in that each of said interface circuits (I) basically consists of:

- a driving circuit (DRD), with an output of the open-collector type, allowing a pre-determined binary logic level to be prevailing on said data transmission channel (TXD);

- a first (RSD), a second (RRC) and a third (RSC) receiving circuits designed to receive the bit flows respectively present on said data reception channel (RXD), said clock channel associated with the transmission (TXC) and with the reception (RXC);

- a fourth (RIC) reception circuit of the bit flow present on said data transmission channel;

- a first logic circuit (PC) capable of transmitting, through said driving circuit (DRD) on said data transmission channel, the data arriving from its terminal, capable also of receiving the data, to be sent to its own terminal, present on said data reception channel and received through said first receiving circuit (RSD), furthermore capable of receiving a clock signal through said second (RRC) and third (RSC) reception circuits;

- a second logic circuit (SDP) capable of receiving the data present on said data transmission channel through said fourth reception circuit (RIC) and of recognizing said free or busy states;

- a third logic circuit (EC) capable of making a comparison between the bits of said address, bits present on the data transmission channel and received at its first input through said fourth reception circuit (RIC), and the address bits of its own terminal received at its second input and present at the input of said driving circuit (DRD), supplied by said first logic circuit (PC);

- a fourth logic circuit (LAD) capable of receiving and memorizing suitable command signals it receives from its own terminal and relating to the transmission modalities of its own message, capable also of enabling or disabling, by means of a command connection towards said first logic circuit (PC), the transmission of its own message by said first logic circuit, on the basis of said suitable command signals, upon reception of said recognition of free or busy channel states from said second logic circuit (SDP), and upon reception of the comparison result of the address bits from said third logic circuit (EC), and finally capable of communicating the result of said transmission to its terminal.

6) Access system according to claim 5, characterized in that said first (PC), second (SDP) and fourth (LAD) logic circuit of each of said interface circuits are bit-rate synchronized by said clock signal received through said second reception circuit (RRC).

7) Access system according to claims 5 and 6, characterized in that said second logic circuit (SDP) comprises at least a shift register, in which there are present at each bit time at least said last seven bits transmitted on said data transmission channel, and a decoder which recognizes said free state and which supplies said fourth logic circuit with an assent signal to the start of the transmission of its own message.

8) Access system according to claims 5 and 6, characterized in that said third logic circuit (EC) consists of a comparator which, when the bits present at its two inputs have different logic levels, supplies said fourth logic circuit (LAD) with a disabling signal of the transmission of its message, and when, on the contrary, the bits present at its two inputs have the same logic value, supplies said fourth logic circuit with an assent signal to prosecuting the transmission.

0060517

Fig.1

0060517

Fig. 2

Fig.3

0060517

3/3

European Patent
Office

**EUROPEAN SEARCH REPORT**

0060517

Application number

EP 82 10 1946

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | NTG-FACHBERICHTE, volume 73, The International Symposium on Subscriber Loops and Services" September 15-19, 1980 MUNICH (DE) VDE-VERLAG BERLIN (DE) FOSSATI et al.: "A remote powered digital telephone set: problems, performance and prospects", pages 60 to 63<br><br>  * totality * | 1 | H 04 M 11/06 |
| A | NTG-FACHBERICHTE, volume 73, The International Symposium on Subscriber Loops and Services" September 15-19, 1980, Munich, VDE Verlag, BERLIN (DE) LATIN et. al.: "Application of telecommunications network architecture to multi-service terminal equipment", pages 104 to 108<br><br>  * page 106, right-hand column, line 38 to page 107, right-hand column, line 8, figures 7 and 8 * | 1 | **TECHNICAL FIELDS SEARCHED (Int. Cl. ³)**<br><br>H 04 M 11/06<br>      L 11/16 |
| A | INTERNATIONAL CONFERENCE ON COMMUNICATIONS, Seattle June. 8-12, 1980, volume 3 of 3 NEW YORK (US) STAGG et al.: "An integrated digital subscribers speech and data service"        ./. | | |

The present search report has been drawn up for all claims

| Place of search | Date of completion of the search | Examiner |
|---|---|---|
| THE HAGUE | June 15, 1982 | WANZEELE |

## European Patent Office

## EUROPEAN SEARCH REPORT

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | pages 39.6.1 to 39.6.6<br><br>* totality *<br><br>-- | 1 | |
| A | INSTITUTE OF ELECTRICAL AND ELECTRONICS ENGINEERS. Proceedings Of the Annual Symposium on Computer Architecture", January 20-22, 1975 NEW YORK (US) NISNEVICH et al.: "Decentralized priority control in data communication", pages 1 to 5 | | |
| | * page 1, right-hand column, line 13 to page 2, left-hand column, line 27 *<br><br>-- | 1,3-5, 8 | TECHNICAL FIELDS SEARCHED (Int. Cl.³) |
| A | US - A - 3 919 461 (HUNTING) | | |
| | * column 2, line 27 to column 4, line 3; figures 1 and 2 * | 1,3-5, 8 | |

---------

EPO Form 1503.2  06.78